# EUROPÄISCHE PATENTSCHRIFT

(11) **EP 4 526 242 B1**
(45) Veröffentlichungstag und Bekanntmachung des Hinweises auf die Patenterteilung: **15.07.2026**
(21) Anmeldenummer: 23727959.1
(22) Anmeldetag: 16.05.2023
(51) Int. Cl.: B66B 7/06, D07B 1/22

(54) **RIEMEN ZUM TRAGEN EINES FAHRKORBS UND/ODER EINES GEGENGEWICHTS EINER AUFZUGSANLAGE**
BELT FOR SUPPORTING A CABIN AND / OR COUNTERWEIGHT OF AN ELEVATOR SYSTEM
COURROIE PERMETTANT DE SUPPORTER UNE CAGE D'ASCENSEUR ET/OU UN CONTREPOIDS D'UNE INSTALLATION D'ASCENSEUR

(30) Priorität: 17.05.2022 EP 22173655
(43) Veröffentlichungstag der Anmeldung: 26.03.2025
(73) Patentinhaber: INVENTIO AG, 6052 Hergiswil (CH)
(72) Erfinder: ZAPF, Volker, 6012 Kriens-Obernau (CH); DOLD, Florian, 6330 Cham (CH); BERNER, Oliver, 6210 Sursee (CH); HESS, Dominique, 8906 Bonstetten (CH)
(74) Vertreter: Inventio AG
(86) Internationale Anmeldenummer: PCT/EP2023/063120
(87) Internationale Veröffentlichungsnummer: WO 2023/222693

(56) Entgegenhaltungen:
- WO-A1-2010/072690
- WO-A1-2020/104089
- US-A1- 2008 081 721
- US-A1- 2015 024 891
- US-A1- 2018 305 178

## Beschreibung

Die vorliegende Erfindung betrifft einen Riemen zum Tragen eines Fahrkorbs und/oder eines Gegengewichts einer Aufzugsanlage. Ferner betrifft die Erfindung ein Verfahren zum Herstellen eines solchen Riemens und eine Aufzugsanlage mit einem solchen Riemen.

Ein Fahrkorb einer Aufzugsanlage kann zum Beispiel an mehreren Stahlseilen aufgehängt sein, die über eine durch einen Elektroantrieb angetriebene Treibscheibe geführt und reibschlüssig mit dieser verbunden sind. Durch Drehen der Treibscheibe kann der Fahrkorb dann angehoben oder abgesenkt werden. Statt solcher Stahlseile können auch spezielle Riemen (auch Gurte genannt) eingesetzt werden. Ein solcher Riemen umfasst in der Regel einen bandförmigen Riemenkörper aus einem Elastomermaterial, in den mehrere Zugträger in Form vergleichsweise dünner Stahlseile eingebettet sind. Die Zugträger dienen dazu, den Hauptanteil der im Betrieb der Aufzugsanlage auftretenden dynamischen und/oder statischen Zugkräfte aufzunehmen. Der Reibschluss mit der Treibscheibe wird über den Riemenkörper hergestellt. Im Interesse einer einfachen Montage und/oder Demontage und eines effizienten Betreibens der Aufzugsanlage sollte der Riemen möglichst leicht sein und eine hohe Bruchlast im Verhältnis zum Eigengewicht aufweisen.

Beispiele für solche Riemen sind in EP 2 356 055 B1**,** WO 2016/030298 A, US 2008/081721 A1 und US 2018/305178 A1 beschrieben.

In EP 1 905 892 A2 wird ein Kunstfaserseil für eine Aufzugsanlage beschrieben.

Es kann daher Bedarf an einem verbesserten, insbesondere gewichtsoptimierten Riemen zum Tragen eines Fahrkorbs und/oder eines Gegengewichts einer Aufzugsanlage bestehen. Zudem kann Bedarf an einem entsprechenden Verfahren zum Herstellen eines solchen Riemens und einer entsprechenden Aufzugsanlage bestehen.

Diesen Bedürfnissen kann mit den Gegenständen der unabhängigen Ansprüche entsprochen werden. Vorteilhafte Ausführungsformen sind in den abhängigen Ansprüchen, der nachfolgenden Beschreibung und den beigefügten Figuren dargelegt.

Ein erster Aspekt der Erfindung betrifft einen Riemen zum Tragen eines Fahrkorbs und/oder eines Gegengewichts einer Aufzugsanlage. Der Riemen umfasst einen Riemenkörper mit einer Traktionsseite zum Berühren einer Treibscheibe der Aufzugsanlage und einer der Traktionsseite gegenüberliegenden Rückenseite, wobei der Riemenkörper an der Traktionsseite ein an eine Aussenkontur der Treibscheibe angepasstes Rillenprofil und an der Rückenseite ein vom Rillenprofil abweichendes Profil aufweist (beispielsweise kann der Riemenkörper an der Rückenseite flach sein oder ein anderes Rillenprofil als an der Traktionsseite aufweisen). Zudem umfasst der Riemen mehrere in den Riemenkörper eingebettete Zugträger zum Übertragen von Zugkräften, wobei jeder Zugträger aus mehreren miteinander verdrillten Litzen gebildet ist und jede Litze aus mehreren miteinander verdrillten metallisch oder nicht metallisch Fasern, insbesondere Aramidfasern oder Stahlfasern gebildet ist.

Ein solcher Riemen ist im Vergleich zu ähnlichen Riemen mit Stahlzugträgern bei gleicher Tragfähigkeit deutlich leichter. Dies vereinfacht die Handhabung des Riemens, insbesondere bei der Montage und/oder Demontage in sehr hohen Gebäuden wie beispielsweise Wolkenkratzern (in diesen Fällen kann der Riemen je nach Höhe des Gebäudes mehrere Hundert oder sogar mehr als tausend Meter lang sein). In Versuchen erwies sich ein solcher Riemen zudem als besonders langlebig und wartungsarm. Das geringere Eigengewicht bei gleicher Bruchlast führt dazu das weniger Masse bewegt werden muss. Weiter ermöglicht ein solcher leichter Riemen eine höhere Kabinenlast als mit einem herkömmlichen schweren Riemen möglich wäre.

Unter einem Riemenkörper kann allgemein eine Ummantelung der Zugträger verstanden werden. Der Riemenkörper kann aus einem Elastomermaterial, insbesondere aus Polyurethan oder einem Polyurethan umfassenden Elastomermaterial, hergestellt sein.

Ein Riemen kann insbesondere breiter sein als er hoch ist.

Unter dem Ausdruck «eingebettet in den Riemenkörper» kann vor- und nachstehend «teilweise oder vollständig vom Riemenkörper umgeben» verstanden werden.

Die Zugträger (auch Cords oder Zugstränge genannt) können neben- und/oder übereinander im Riemenkörper angeordnet sein. Insbesondere können die Zugträger über eine Breite des Riemenkörpers gleichmässig verteilt angeordnet sein. Weiter ist es vorteilhaft, wenn alle Zugträger auf gleicher Höhe liegen beziehungsweise den gleichen Laufradius aufweisen.

Beispielsweise kann jede Litze (auch Strand genannt) durch mehrere miteinander verdrillte Garne gebildet sein, wobei jedes Garn durch mehrere unidirektionale, d. h. nicht miteinander verdrillte Aramidfasern gebildet sein kann. Beispielsweise kann jedes Garn mehr als 100 oder mehr als 1000 Aramidfasern umfassen. Jedes Garn kann zusätzlich in einem Kunststoffbad imprägniert worden sein.

Weiter können auch andere nicht metallische Fasern, beispielsweise Glasfasern, verwendet werden. Besonders vorteilhaft ist die Verwendung von hochfesten Fasern mit einer Zugfestigkeit grösser als 1000N/mm2, insbesondere 2000N/mm2, bevorzugt 3000N/mm2, besonders bevorzugt 4000N/mm2, insbesondere 5000N/mm2.

Die aus den Garnen gebildete Litze kann optional einer Wärmebehandlung unterzogen worden sein, um die Aussenfläche der Litze zu glätten.

Die Litzen des gleichen Zugträgers können gleich und/oder unterschiedlich dick sein.

Beispielsweise können die Litzen eines jeden Zugträgers miteinander in einer ersten Schlagrichtung und die Aramidfasern (oder Garne) einer jeden Litze des Zugträgers miteinander in einer von der ersten Schlagrichtung abweichenden zweiten Schlagrichtung verdrillt sein.

Die Schlaglänge einer einzelnen Litze kann beispielsweise zwischen 20 mm und 30 mm, insbesondere zwischen 21 mm und 25 mm (für die dickste Litze), liegen.

Die Schlaglänge eines einzelnen Zugträgers kann beispielsweise zwischen 40 mm und 60 mm, insbesondere zwischen 48 mm und 52 mm (plus/minus 2 mm), liegen.

Es ist möglich, dass jeder Zugträger ausschliesslich Aramidfasern umfasst, d. h. neben den Aramidfasern keine anderen Fasern oder Drähte (beispielsweise Stahldrähte) umfasst. Denkbar sind aber auch Zugträger mit gemischter Zusammensetzung, die neben den Aramidfasern andere Fasern oder Drähte (beispielsweise Stahldrähte oder Karbonfasern) umfassen.

In Versuchen als besonders vorteilhaft haben sich Varianten des Riemens erwiesen, bei denen ein Verhältnis von Bruchlast (in kN) zu Breite (in mm) des Riemens grösser als 2, insbesondere grösser als 3, besonders bevorzugt zwischen 3.6 und 3.75 liegt und/oder grösser als 4, insbesondere grösser als 5, besonders bevorzugt zwischen 5.2 und 5.4 kN/mm ist.

Ein zweiter Aspekt der Erfindung betrifft ein Verfahren zum Herstellen eines Riemens zum Tragen eines Fahrkorbs und/oder eines Gegengewichts einer Aufzugsanlage, insbesondere des vor- und nachstehend beschriebenen Riemens. Das Verfahren umfasst die folgenden Schritte: Bereitstellen mehrerer Zugträger zum Übertragen von Zugkräften, wobei jeder Zugträger aus mehreren miteinander verdrillten Litzen gebildet ist und jede Litze aus mehreren miteinander verdrillten Aramidfasern gebildet ist; Vorheizen der Zugträger auf eine Temperatur zwischen 120 °C und 160 °C, bevorzugt zwischen 130 °C und 150 °C, besonders bevorzugt zwischen 135 °C und 145 °C; Formen eines die Zugträger einbettenden Riemenkörpers mit einer Traktionsseite zum Berühren einer Treibscheibe der Aufzugsanlage und einer der Traktionsseite gegenüberliegenden Rückenseite durch Einbetten der vorgeheizten Zugträger in ein Elastomermaterial durch Extrudieren des Elastomermaterials.

Dieses Verfahren ermöglicht eine besonders effiziente Herstellung des Riemens.

Zum Vorheizen können die Zugträger beispielsweise in einem oder mehreren Abschnitten lokal erwärmt werden. Bei dem erwärmten Abschnitt oder den erwärmten Abschnitten kann es sich beispielsweise um Abschnitte handeln, die anschliessend in das Elastomermaterial eingebettet werden sollen.

Insbesondere kann der Riemenkörper an der Traktionsseite mit einem an eine Aussenkontur der Treibscheibe angepassten Rillenprofil und an der Rückenseite mit einem vom Rillenprofil abweichenden Profil ausgeformt werden (beispielsweise kann der Riemenkörper an der Rückenseite flach oder mit einem anderen Rillenprofil als an der Traktionsseite ausgeformt werden). In diesem Fall kann beispielsweise eine Profilhöhe des Rillenprofils mindestens einer halben Gesamthöhe des Riemens entsprechen.

Es wird darauf hingewiesen, dass Merkmale des Verfahrens auch Merkmale des vor- und nachstehend beschriebenen Riemens sein können (und umgekehrt).

Ein dritter Aspekt der Erfindung betrifft eine Aufzugsanlage. Die Aufzugsanlage umfasst den vor- und nachstehend beschriebenen Riemen und einen Aufzugsschacht. Darüber hinaus umfasst die Aufzugsanlage einen im Aufzugsschacht verfahrbar angeordneten Fahrkorb, wobei der Riemen den Fahrkorb trägt, oder ein im Aufzugsschacht verfahrbar angeordnetes Gegengewicht, wobei der Riemen das Gegengewicht trägt, oder sowohl den Fahrkorb als auch das Gegengewicht.

Der Fahrkorb und das Gegengewicht können über den gleichen Riemen miteinander verbunden oder jeweils durch einen eigenen Riemen getragen sein.

Ohne den Umfang der Erfindung in irgendeiner Weise zu beschränken, können Ausführungsformen der Erfindung als auf den nachstehend beschriebenen Gedanken und Erkenntnissen beruhend angesehen werden.

Gemäss einer Ausführungsform kann eine Profilhöhe des Rillenprofils mindestens einer halben Gesamthöhe des Riemens entsprechen. Zusätzlich oder alternativ kann der Riemenkörper, wie weiter oben erwähnt, an der Rückenseite flach sein. Somit kann der Riemen besonders flach ausgeführt werden. Dies verbessert unter anderem die Biegsamkeit des Riemens. Die Ummantelung schützt die Zugträger gleichzeitig vor Umwelteinflüssen wie beispielsweise Feuchtigkeit und UV-Strahlen.

Gemäss einer Ausführungsform kann jeder Zugträger eine Mittellitze und mehrere, insbesondere sechs Aussenlitzen umfassen, die die Mittellitze (ringförmig) umgeben. Zusätzlich oder alternativ kann ein Verhältnis eines Durchmessers einer dünnsten der Litzen zu einem Durchmesser einer dicksten der Litzen mindestens 0,8, insbesondere mindestens 0,9, betragen.

Die Aussenlitzen können die Mittellitze in einer oder mehreren Lagen umgeben. In diesem Fall kann beispielweise jede Lage mindestens sechs Aussenlitzen umfassen. Unterschiedliche Lagen können gleich oder unterschiedlich viele Aussenlitzen umfassen. Ein Abstand zwischen benachbarten Aussenlitzen (der gleichen Lage) kann beispielsweise höchstens 0,5 mm, insbesondere höchstens 0,1 mm, betragen. Ein Durchmesser der Mittellitze und/oder einer jeden Aussenlitze kann beispielsweise zwischen 1 mm und 3 mm liegen. Die Mittelitze kann dicker als jede Aussenlitze ausgeführt sein. Möglich ist aber auch der umgekehrte Fall.

Somit können die Zugträger besonders dünn, d. h. besonders gewichtssparend, ausgeführt werden, ohne dass die Tragfähigkeit des Riemens massgeblich beeinträchtigt wird. Mithilfe dieser Ausführungsform kann ein Längengewicht von weniger als 500 g/m, insbesondere von weniger als 250 g/m, erreicht werden.

Als vorteilhaft haben sich Riemen mit einem Verhältnis von Bruchlast (in kN) zu Metergewicht (g/m) von grösser 0.2, insbesondere grösser als 0.3, bevorzugt grösser 0.4, besonders bevorzugt grösser 0.5 kN*m/g erwiesen.

Es wird so ein vergleichsweiser leichter Riemen mit einer jedoch vergleichsweise hohen Bruchlast zur Verfügung gestellt.

Gemäss einer Ausführungsform können die Zugträger mindestens einen (seilförmigen) ersten Zugträger und mindestens einen (seilförmigen) zweiten Zugträger umfassen, die in ihrer Schlagrichtung voneinander abweichen. Unter einer Schlagrichtung kann beispielsweise ein S- oder Z-Schlag verstanden werden.

Gemäss einer Ausführungsform können die Zugträger mehrere erste Zugträger und mehrere zweite Zugträger umfassen, die über eine Breite des Riemenkörpers verteilt angeordnet sind. Dabei kann zwischen benachbarten ersten Zugträgern mindestens einer der zweiten Zugträger angeordnet sein. Anders ausgedrückt können die ersten und die zweiten Zugträger abwechselnd über die Breite des Riemenkörpers verteilt angeordnet sein. Auf diese Weise kann die Wahrscheinlichkeit dafür verringert werden, dass sich der Riemen unter Last verdreht. Dieser Effekt kann verstärkt werden, indem genauso viele erste wie zweite Zugträger in den Riemenkörper eingebettet werden, d. h. die Anzahl der Zugträger gerade gewählt wird. Beispielsweise können bei einer Anzahl von insgesamt vier Zugträgern zwei erste Zugträger und zwei zweite Zugträger in den Zugträger eingebettet sein, bei einer Anzahl von insgesamt sechs Zugträgern drei erste Zugträger und drei zweite Zugträger usw.

Gemäss einer Ausführungsform können mindestens vier Zugträger in den Riemenkörper eingebettet sein. Zusätzlich oder alternativ kann die Anzahl der in den Riemenkörper eingebetteten Zugträger gerade sein. Dies kann das Laufverhalten des Riemens unter Last weiter verbessern.

Anspruchsgemäss kann eine Folie aus einem elektrisch leitfähigen Material, insbesondere aus Kupfer, auf die Rückenseite aufgebracht sein. Beispielsweise kann sich die Folie über eine gesamte Länge des Riemens erstrecken. Dies vereinfacht die Überwachung des Riemens. Insbesondere wird somit eine Überwachung mithilfe einer Widerstandsmessung an der Folie ermöglicht (eine signifikante Änderung des gemessenen elektrischen Widerstands lässt auf eine Beschädigung des Riemens schliessen).

Alternativ oder zusätzlich ist anspruchsgemäss mindestens ein Stahlzugträger in den Riemenkörper eingebettet. Der Stahlzugträger kann seil- oder litzenförmig ausgeführt sein. Beispielsweise kann der Stahlzugträger durch mehrere miteinander verdrillte Stahllitzen gebildet sein, wobei jede Stahllitze durch mehrere miteinander verdrillte Stahldrähte gebildet sein kann. Alternativ kann der Stahlzugträger durch eine einzelne Stahllitze gebildet sein (beispielsweise aus Gewichtsgründen). Diese Ausführungsform ermöglicht eine einfachere Überwachung des Riemens im Vergleich zu einer Ausführungsform ohne Stahlzugträger. Insbesondere wird somit eine Überwachung des Riemens mithilfe einer Widerstandsmessung am Stahlzugträger ermöglicht.

Gemäss einer Ausführungsform kann jeder Zugträger eine brandhemmende Ummantelung, insbesondere eine brandhemmende Polyurethanummantelung, aufweisen. Dies verringert die Brandgefahr. Die brandhemmende Ummantelung kann beispielsweise aus einem Kunststoffmaterial hergestellt sein, das mindestens eines der folgenden brandhemmenden Additive umfasst: Melaminphosphat, Melaminpolyphosphat, Melamincyanurat, Ammoniumpolyphosphat, eine halogenierte organische Verbindung, einen organischen Phosphorsäureester, organisches Phosphonat, roten Phosphor, Metallhydroxid, Metallcarbonat, Glaspulver, Quarzpulver.

Die brandhemmende Ummantelung kann zumindest teilweise durch den Riemenkörper gebildet sein. Anders ausgedrückt kann die brandhemmende Ummantelung aus dem gleichen Material wie der Riemenkörper oder teilweise oder vollständig aus einem anderen Material als der Riemenkörper hergestellt sein.

Gemäss einer Ausführungsform ist eine Traktionsseite des Riemens ohne brandhemmendes Material, während eine der Traktionsseite abgewandte Rückseite mit dem brandhemmenden Material ausgeführt ist.

Gemäss einer Ausführungsform kann das Rillenprofil durch mehrere Erhebungen und Vertiefungen gebildet sein, deren jeweilige Längsrichtung parallel zur Längsrichtung des Riemens verlaufen kann. In diesem Fall kann jeder Zugträger in eine der Erhebungen eingebettet sein, sodass eine Querschnittsfläche der Erhebung mindestens eine halbe Querschnittsfläche des Zugträgers umfasst. Somit kann der Riemen besonders flach ausgeführt werden. Dies verbessert unter anderem die Biegsamkeit des Riemens.

Gemäss einer Ausführungsform kann ein Durchmesser eines jeden Zugträgers mindestens 70 % einer Gesamthöhe des Riemens entsprechen. Ein derartiges Verhältnis erwies sich in Versuchen als besonders günstig im Hinblick auf Gewicht und Lebensdauer des Riemens.

Gemäss einer Ausführungsform kann das Formen des Riemenkörpers folgende Schritte umfassen: Formen eines Grundkörpers durch Einbetten der vorgeheizten Zugträger in das Elastomermaterial durch Extrudieren des Elastomermaterials in einem ersten Extrudierschritt; Formen des Riemenkörpers durch Aufbringen der Traktionsseite und der Rückenseite auf den Grundkörper durch erneutes Extrudieren des Elastomermaterials in mindestens einem zweiten Extrudierschritt.

Es ist möglich, dass die Traktions- und die Rückenseite in getrennten Extrudierschritten auf den Grundkörper aufgebracht werden. Beispielsweise kann die Rückenseite in diesem Fall vor der Traktionsseite aufgebracht werden (möglich ist aber auch der umgekehrte Fall).

Alternativ können die Traktions- und die Rückenseite gleichzeitig, d. h. in einem gemeinsamen Extrudierschritt, auf den Grundkörper aufgebracht werden. Dies kann die Effizienz des Verfahrens weiter verbessern.

In unterschiedlichen Extrudierschritten kann jeweils das gleiche Elastomermaterial extrudiert werden. Alternativ können in unterschiedlichen Extrudierschritten unterschiedliche Zusammensetzungen des Elastomermaterials extrudiert werden. Auf diese Weise können beispielsweise die jeweiligen Eigenschaften des Grundkörpers, der Traktions- und/oder der Rückenseite (unabhängig voneinander) gezielt angepasst werden.

In manchen Fällen kann es sinnvoll sein, das Elastomermaterial zu vulkanisieren statt zu extrudieren. Das ist besonders bei der Verwendung von Ethylen-Propylen-Dien-Kautschuke Elastomeren (EPDM) der Fall.

Gemäss einer Ausführungsform kann die Aufzugsanlage ferner eine Treibscheibe umfassen, wobei der Riemen mit seiner Traktionsseite die Treibscheibe berühren kann. In diesem Fall kann ein Durchmesser der Treibscheibe um einen Faktor 80 bis 120, insbesondere 90 bis 110, grösser als ein Durchmesser einer dicksten Litze des Riemens sein. Solche Grössenverhältnisse erwiesen sich in Versuchen als besonders praxistauglich.

Zusätzlich oder alternativ kann der Fahrkorb eine eigene Bremse umfassen, die ausgebildet ist, um den Fahrkorb im normalen Betrieb der Aufzugsanlage abzubremsen und/oder festzuhalten. Diese Fahrkorbbremse kann beispielsweise eine am Fahrkorb montierte mechanische Bremse sein. Die Fahrkorbbremse kann zusätzlich zu einer (nur im Notfall eingreifenden) Fangbremse vorgesehen sein. Dies verbessert den Fahrkomfort. Insbesondere können auf diese Weise den Fahrkomfort beeinträchtigende Schwingungen des Fahrkorbs beim Abbremsen vermieden werden. Solche Schwingung können bei der Verwendung von Aramid Zugträgern im Vergleich zu Zugträgern aus Stahl verstärkt auftreten und insbesondere bei grossen Hubhöhen (langen Riemen) zu unerwünschten Einbussen im Fahrkomfort führen.

Zusätzlich oder alternativ kann die Aufzugsanlage eine weitere Treibscheibe umfassen, wobei der Riemen mit seiner Traktionsseite die weitere Treibscheibe berührt.

Vorteilhaft erweist sich, dass bei der Verwendung von zwei Treibscheiben (d.h. zwei Antrieben) jeder der Antriebe vergleichsweise klein und leicht gebaut werden kann. So entsteht eine Aufzugsanlage die bedingt durch das tiefe Gewicht der Antriebe und des Riemens einfach installiert werden kann.

Gemäss einer Ausführungsform ist die Aufzugsanlage mit einer Hubhöhe von grösser 100m, bevorzugt, grösser 150mm, insbesondere grösser 200m, besonders bevorzugt grösser 250m, vorteilhaft grösser 300m ausgeführt.

Die Vorteile (Energie Einsparung im Betrieb, einfache Installation) der Verwendung von vergleichsweisen leichten Riemen (und Antrieben) sind bei grossen Hubhöhen besonders ausgeprägt.

In solchen Aufzugsanlagen ist, falls vorhanden, auch das Kompensationsmedium leichter. Dies erleichtert die Installation der Aufzugsanlage und ermöglicht einen energieeffizienten Betrieb der Aufzugsanlage.

Nachfolgend werden vorteilhafte Ausführungsformen der Erfindung unter Bezugnahme auf die beigefügten Zeichnungen weiter erläutert, wobei weder die Zeichnungen noch die Erläuterungen als die Erfindung in irgendeiner Weise einschränkend auszulegen sind.
Fig. 1 zeigt eine Aufzugsanlage gemäss einer Ausführungsform der Erfindung.
Fig. 2 zeigt eine Querschnittsansicht eines Riemens gemäss einer Ausführungsform der Erfindung.
Fig. 3 zeigt eine Querschnittsansicht eines Zugträgers des Riemens.

Die Zeichnungen sind lediglich schematisch und nicht massstabsgetreu. Gleiche Bezugszeichen in verschiedenen Zeichnungen bezeichnen gleiche bzw. gleichwirkende Merkmale.

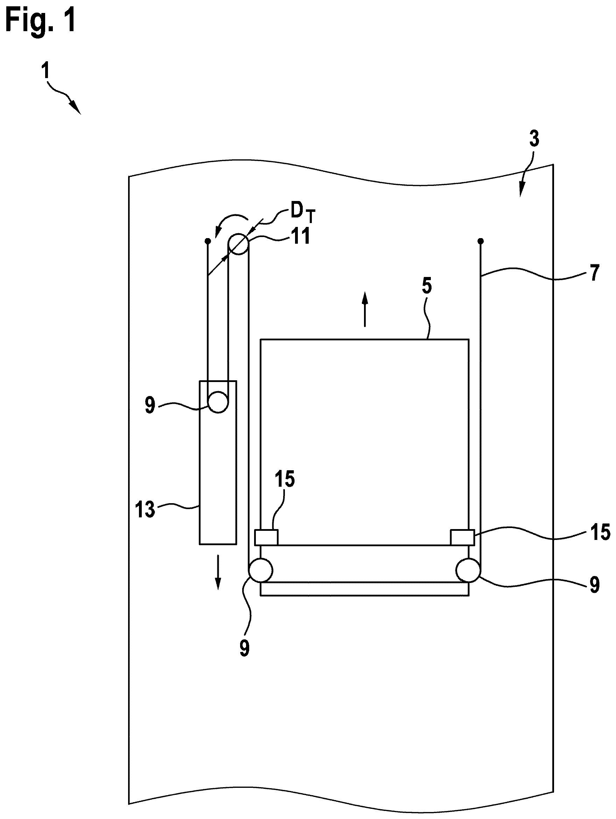

Fig. 1 zeigt eine Aufzugsanlage 1 zum Transportieren von Personen und/oder Gegenständen zwischen Stockwerken eines mehrstöckigen Gebäudes. Die Aufzugsanlage 1 umfasst einen Aufzugsschacht 3 und einen Fahrkorb 5, der im Aufzugsschacht 3 zwischen den Stockwerken verfahrbar angeordnet ist. Der Fahrkorb 5 ist an einem Riemen 7 aufgehängt, der über mehrere Umlenkrollen 9 und eine Treibscheibe 11 zum Antreiben des Riemens 7 geführt ist. Zudem ist der Fahrkorb 5 über den Riemen 7 mit einem Gegengewicht 13 verbunden. Durch Drehen der Treibscheibe 11 und entsprechendes Verlagern des reibschlüssig mit der Treibscheibe 11 verbundenen Riemens 7 wird je nach Drehrichtung entweder der Fahrkorb 5 angehoben und das Gegengewicht 13 absenkt (wie in Fig. 1 mit Pfeilen angedeutet) oder der Fahrkorb 5 abgesenkt und das Gegengewicht 13 angehoben. Die in Figur 1 gezeigte Aufzugsanlage zeigt eine 2:1 Aufhängung. Die oben und im Folgenden beschriebene Erfindung kann auch mit einer 1:1 Aufhängung ausgeführt sein (nicht gezeigt).

Der Fahrkorb 5 kann mit einer eigenen, insbesondere mechanischen Fahrkorbbremse 15 ausgestattet sein, die den Fahrkorb 5 im normalen Betrieb der Aufzugsanlage 1 zusätzlich abbremst, beispielsweise zum Halten in einem Zielstockwerk.

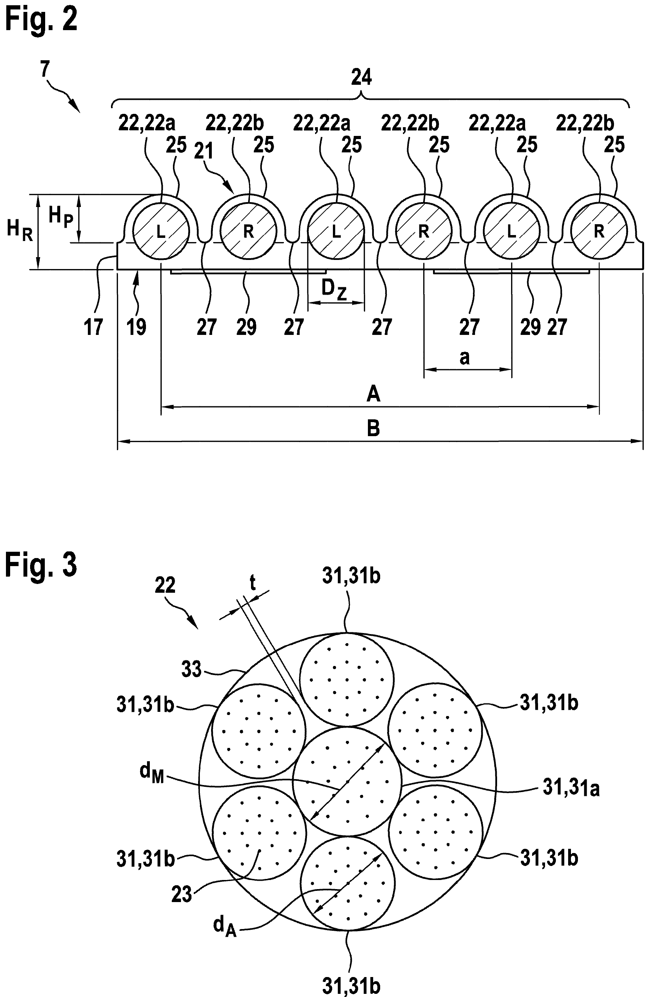

In Fig. 2 und Fig. 3 zeigen den genaueren Aufbau des Riemens 7.

Wie in Fig. 2 zu sehen, umfasst der Riemen 7 einen Riemenkörper 17 mit einer Rückenseite 19 und einer der Rückenseite 19 gegenüberliegenden Traktionsseite 21, mit der der Riemen 7 die Treibscheibe 11 berührt. Der Riemenkörper 17 kann aus einem Elastomermaterial, insbesondere aus Polyurethan, hergestellt sein, beispielsweise durch Extrusion (siehe weiter unten).

In den Riemenkörper 17 sind mehrere Zugträger 22 eingebettet, die den Hauptanteil der im Betrieb der Aufzugsanlage 1 auf den Riemen 7 einwirkenden Zugkräfte aufnehmen. Die Zugträger 22 sind jeweils vollständig aus Aramidfasern 23 (siehe Fig. 3) gebildet.

In diesem Beispiel ist der Riemenkörper 17 an der Rückenseite 19 flach ausgeführt. Es ist aber auch möglich, dass der Riemenkörper 17 an der Rückenseite 19 speziell strukturiert ist.

An der Traktionsseite 21 weist der Riemenkörper 17 ein an eine Aussenkontur der Treibscheibe 11 angepasstes Rillenprofil 24 auf, das in diesem Beispiel aus mehreren länglichen Erhebungen 25 und Vertiefungen 27 gebildet ist, die abwechselnd über eine Breite B des Riemenkörpers 17 verteilt angeordnet sind. Die jeweilige Längsrichtung der Erhebungen 25 und Vertiefungen 27 kann parallel zur Längsrichtung des Riemenkörpers 17 (d. h. des Riemens 7) verlaufen.

Dabei kann jeder Zugträger 22 teilweise oder vollständig innerhalb einer der Erhebungen 25 verlaufen. Beispielsweise kann eine Querschnittsfläche einer jeden Erhebung 25 60 % bis 90 % einer Querschnittsfläche des darin verlaufenden Zugträgers 22 umfassen (die Querschnittsfläche der Erhebung 25 ist in Fig. 2 durch eine gestrichelte waagrechte Linie vom restlichen Riemenkörper 17 abgegrenzt). Somit kann der Riemen 7 besonders flach ausgeführt werden.

Aus Stabilitätsgründen sollte jeder Zugträger 22 so tief in den Riemenkörper 17 eingebettet sein, dass ein den Zugträger 22 umgebendes Riemenkörpermaterial an seiner dünnsten Stelle mindestens 1 mm dick ist.

Auf die (flache) Rückenseite 19 kann optional eine elektrisch leitfähige Folie 29 zur Überwachung des Riemens 7 (insbesondere mithilfe einer Messung eines elektrischen Widerstands an der Folie 29) aufgebracht sein. Es ist zweckmässig, wenn sich die Folie 29 über die gesamte Länge des Riemenkörpers 17 (oder eines für die Überwachung relevanten Längenabschnitts des Riemenkörpers 17) erstreckt. Die Folie 29 kann in Form einer einzelnen Bahn oder - wie in Fig. 2 zu sehen - in Form von zwei oder mehr parallelen Bahnen auf die Rückenseite 19 aufgebracht sein.

Insbesondere kann eine Profilhöhe H_{P} des Rillenprofils 24 gleich der halben Gesamthöhe H_{R} des Riemens 7 sein oder grösser als die halbe Gesamthöhe H_{R} sein. In diesem Beispiel entspricht die Profilhöhe H_{P} einem senkrechten (d. h. zur Breite B orthogonalen) Abstand zwischen einem höchsten Punkt der Erhebungen 25 und einem tiefsten Punkt der Vertiefungen 27 und die Gesamthöhe H_{R} einem senkrechten (d. h. zur Breite B orthogonalen) Abstand der Rückenseite 19 zur Traktionsseite 21, genauer zum höchsten Punkt der Erhebungen 25.

Die Zugträger 22 können über die Breite B gleichmässig verteilt angeordnet sein (zusätzlich können die Zugträger 22 in mehreren Lagen übereinander angeordnet sein).

Die Gesamthöhe H_{R} kann beispielsweise zwischen 6,0 mm und 12,0 mm (plus/minus 0,1 mm), insbesondere zwischen 7,4 mm und 10,5 mm (plus/minus 0,1 mm), liegen.

Die Profilhöhe H_{P} kann beispielsweise zwischen 4,5 mm und 8,5 mm (plus/minus 0,1 mm), insbesondere zwischen 4,8 mm und 7,9 mm (plus/minus 0,1 mm), liegen.

Die Breite B kann beispielsweise zwischen 30,0 mm und 60,0 mm (plus/minus 0,5 mm), insbesondere zwischen 33,0 mm und 48,0 mm (plus/minus 0,5 mm), liegen.

Ein Durchmesser D_{Z} der Zugträger 22 kann beispielsweise zwischen 4,00 mm und 9,00 mm (plus/minus 0,02 mm), insbesondere zwischen 5,40 mm und 7,70 mm (plus/minus 0,02 mm), liegen. Dabei kann der Durchmesser D_{Z} mindestens 70 % der Gesamthöhe H_{R} entsprechen.

Ein Abstand a (in Richtung der Breite B) zwischen benachbarten Zugträgern 22 kann beispielsweise zwischen 7,0 mm und 14,0 mm (plus/minus 0,1 mm), insbesondere zwischen 8,4 mm und 12,0 mm (plus/minus 0,1 mm), liegen.

Ein Abstand A (in Richtung der Breite B) zwischen den zwei äussersten Zugträgern 22 kann beispielweise zwischen 20,0 mm und 45,0 mm (plus/minus 0,2 mm), insbesondere zwischen 25,2 mm und 36,0 mm (plus/minus 0,2 mm), liegen.

Die Zugträger 22 können seilförmig ausgebildet sein und erste Zugträger 22a mit Schlagrichtung S (in Fig. 2 mit L für «linksgängiges Seil» gekennzeichnet) und zweite Zugträger 22b mit Schlagrichtung Z (in Fig. 2 mit R für «rechtsgängiges Seil» gekennzeichnet) umfassen.

Die ersten Zugträger 22a und die zweiten Zugträger 22b können in Richtung der Breite B abwechselnd angeordnet sein. Dadurch kann einer Neigung des Riemens 7, sich unter Last zu verdrehen, entgegengewirkt werden.

Zudem können genauso viele erste Zugträger 22a wie zweite Zugträger 22b in den Riemenkörper 17 eingebettet sein, hier jeweils drei, also insgesamt sechs Zugträger 22. Durch die gerade Anzahl der Zugträger 22 kann das Laufverhalten des Riemens 7 unter Last weiter verbessert werden.

Zusätzlich kann mindestens ein Stahlzugträger (nicht gezeigt) in den Riemenkörper 17 eingebettet sein. Der Stahlzugträger kann zur Überwachung des Riemens 7 verwendet werden (zusätzlich oder alternativ zur oben genannten Folie 29).

Wie in Fig. 3 zu sehen, kann jeder Zugträger 22 aus mehreren Litzen 31 gebildet sein, die miteinander in der Schlagrichtung S oder Z verdrillt sein können.

Die Litzen 31 können wiederum aus mehreren miteinander verdrillen Aramidfasern 23 gebildet sein.

Beispielsweise können die Litzen 31 eine dickere Mittellitze 31a und mehrere (hier sechs) dünnere Aussenlitzen 31b umfassen, wobei die Aussenlitzen 31b in gleichmässigen tangentialen Abständen (d. h. gleichmässig in Umfangsrichtung der Mittellitze 31a) um die Mittellitze 31a herum verteilt angeordnet sein können.

Ein Durchmesser d_{M} der Mittellitze 31a kann beispielsweise zwischen 1,50 mm und 3,50 mm (plus/minus 0,01 mm), insbesondere zwischen 2,05 mm und 2,90 mm (plus/minus 0,01 mm), liegen.

Ein Durchmesser d_{A} der Aussenlitzen 31b kann beispielsweise zwischen 1,50 mm und 3,50 mm (plus/minus 0,01 mm), insbesondere zwischen 1,85 mm und 2,65 mm (plus/minus 0,01 mm), liegen.

Beispielsweise kann ein Durchmesser D_{T} der Treibscheibe 11 um einen Faktor 80 bis 120, insbesondere 90 bis 110, grösser als der Durchmesser d_{M} sein.

Ein tangentialer Abstand t zwischen benachbarten Aussenlitzen 31b kann beispielsweise zwischen 0,00 mm und 0,30 mm (plus/minus 0,01 mm), insbesondere zwischen 0,10 mm und 0,15 mm (plus/minus 0,01 mm), liegen.

Neben dem in Figur 3 gezeigten Ausführungsbeispiel eines 1+6 Zugträgers, können in weiteren Ausführungsbeispielen Zugträger mit einer 1+5, 1+7 oder einer Warrington Konstruktion eingesetzt werden (nicht gezeigt).

Um die Brandgefahr zu verringern, kann jeder Zugträger 22 zusätzlich mit einer speziellen brandhemmenden Ummantelung 33 ummantelt sein. Die Ummantelung 33 kann aus dem gleichen Material wie der Riemenkörper 17 oder einem anderen Material als der Riemenkörper 17 sein. Insbesondere kann das Material der Ummantelung 33 Polyurethan und zusätzlich mindestens ein brandhemmendes Additiv umfassen.

Der Riemen 7 lässt sich sehr effizient durch Extrusion herstellen. Ein entsprechendes Herstellungsverfahren kann beispielsweise folgende Schritte umfassen.

In einem ersten Schritt werden die (fertigen) Zugträger 22 bereitgestellt. Dabei können die Zugträger 22 so zueinander positioniert werden, wie sie später im Riemenkörper 17 liegen sollen.

In einem zweiten Schritt werden die Zugträger 22 zumindest in denjenigen Abschnitten, die durch Extrusion eines Elastomermaterials in das Elastomermaterial eingebettet werden sollen, lokal erwärmt, bis dort eine Temperatur zwischen 120 °C und 160 °C, bevorzugt zwischen 130 °C und 150 °C, besonders bevorzugt zwischen 135 °C und 145 °C, gemessen wird.

In einem dritten Schritt wird der Riemenkörper 17 geformt (und damit der Riemen 7 hergestellt). Hierzu wird das Elastomermaterial extrudiert. Die vorgeheizten Abschnitte der Zugträger 22 werden dabei mit dem extrudierten Elastomermaterial umgeben.

Der dritte Schritt kann beispielsweise mehrere zeitlich aufeinanderfolgende Extrudierschritte umfassen. So kann in einem ersten Extrudierschritt zunächst ein Grundkörper geformt werden, in den die Zugträger 22 eingebettet sind. In einem zweiten Extrudierschritt kann die Rückseite auf den Grundkörper aufgebracht werden. Schliesslich kann in einem dritten Extrudierschritt die Traktionsseite auf den Grundkörper aufgebracht werden. Das Produkt des dritten Extrudierschritts stellt dann den (fertigen) Riemen 7 dar.

Der Riemenkörper 17 kann aber auch in einem einzigen Extrudierschritt geformt werden.

Alternativ kann der Riemenkörper 17 aus dem Elastomermaterial gegossen werden. Abschliessend wird darauf hingewiesen, dass Begriffe wie beispielsweise «aufweisend» oder «umfassend» keine anderen Elemente oder Schritte ausschliessen und unbestimmte Artikel wie «ein» oder «eine» keine Vielzahl ausschliessen. Ferner wird darauf hingewiesen, dass Merkmale oder Schritte, die mit Verweis auf eine der vorstehenden Ausführungsformen beschrieben werden, auch in Kombination mit Merkmalen oder Schritten, die mit Verweis auf andere der vorstehenden Ausführungsformen beschrieben werden, verwendet werden können. Bezugszeichen in den Ansprüchen sind nicht als Einschränkung anzusehen.

## Patentansprüche

1. Riemen (7) zum Tragen eines Fahrkorbs (5) und/oder eines Gegengewichts (13) einer Aufzugsanlage (1), wobei der Riemen (7) umfasst:
einen Riemenkörper (17) mit einer Traktionsseite (21) zum Berühren einer Treibscheibe (11) der Aufzugsanlage (1) und einer der Traktionsseite (21) gegenüberliegenden Rückenseite (19), wobei der Riemenkörper (17) an der Traktionsseite (21) ein an eine Aussenkontur der Treibscheibe (11) angepasstes Rillenprofil (24) und an der Rückenseite (19) ein vom Rillenprofil (24) abweichendes Profil aufweist;
mehrere in den Riemenkörper (17) eingebettete Zugträger (22, 22a, 22b) zum Übertragen von Zugkräften, wobei jeder Zugträger (22, 22a, 22b) durch mehrere miteinander verdrillte Litzen (31, 31a, 31b) gebildet ist und jede Litze (31, 31a, 31b) durch mehrere miteinander verdrillte metallisch oder nicht metallisch Fasern (23) gebildet ist,
**dadurch gekennzeichnet, dass** eine Folie (29) aus einem elektrisch leitfähigen Material, insbesondere aus Kupfer, auf die Rückenseite (19) aufgebracht ist und/oder mindestens ein Stahlzugträger in den Riemenkörper (17) eingebettet ist.

2. Riemen (7) nach Anspruch 1,
wobei eine Profilhöhe (H_{P}) des Rillenprofils (24) mindestens einer halben Gesamthöhe (H_{R}) des Riemens (7) entspricht; und/oder
wobei der Riemenkörper (17) an der Rückenseite (19) flach ist.

3. Riemen (7) nach einem der vorhergehenden Ansprüche,
wobei jeder Zugträger (22, 22a, 22b) eine Mittellitze (31a) und mehrere, insbesondere sechs Aussenlitzen (31b) umfasst, die die Mittellitze (31a) umgeben; und/oder
wobei ein Verhältnis eines Durchmessers (d_{A}) einer dünnsten der Litzen (31, 31a, 31b) zu einem Durchmesser (d_{M}) einer dicksten der Litzen (31, 31a, 31b) mindestens 0,8, insbesondere mindestens 0,9, beträgt.

4. Riemen (7) nach einem der vorhergehenden Ansprüche,
wobei ein Verhältnis von Bruchlast zu Breite des Riemens grösser als 2 kN/mm, insbesondere grösser als 3, besonders bevorzugt zwischen 3.6 und 3.75 liegt und/oder grösser als 4, insbesondere grösser als 5, besonders bevorzugt zwischen 5.2 und 5.4 kN/mm ist.

5. Riemen (7) nach einem der vorhergehenden Ansprüche,
wobei die Zugträger (22, 22a, 22b) mindestens einen ersten Zugträger (22a) und mindestens einen zweiten Zugträger (22b) umfassen, die in ihrer Schlagrichtung (L, R) voneinander abweichen.

6. Riemen (7) nach Anspruch 5,
wobei die Zugträger (22, 22a, 22b) mehrere erste Zugträger (22a) und mehrere zweite Zugträger (22b) umfassen, die über eine Breite (B) des Riemenkörpers (17) verteilt angeordnet sind, wobei zwischen benachbarten ersten Zugträgern (22a) mindestens einer der zweiten Zugträger (22b) angeordnet ist.

7. Riemen (7) nach einem der vorhergehenden Ansprüche,
wobei mindestens vier Zugträger (22, 22a, 22b) in den Riemenkörper (17) eingebettet sind; und/oder
wobei die Anzahl der in den Riemenkörper (17) eingebetteten Zugträger (22, 22a, 22b) gerade ist.

8. Riemen (7) nach einem der vorhergehenden Ansprüche,
wobei jeder Zugträger (22, 22a, 22b) eine brandhemmende Ummantelung (33), insbesondere eine brandhemmende Polyurethanummantelung (33), aufweist.

9. Riemen (7) nach einem der vorhergehenden Ansprüche,
wobei das Rillenprofil (24) durch mehrere Erhebungen (25) und Vertiefungen (27) gebildet ist;
wobei jeder Zugträger (22, 22a, 22b) in eine der Erhebungen (25) eingebettet ist, sodass eine Querschnittsfläche der Erhebung (25) mindestens eine halbe Querschnittsfläche des Zugträgers (22, 22a, 22b) umfasst.

10. Riemen (7) nach einem der vorhergehenden Ansprüche,
wobei ein Durchmesser (D_{Z}) eines jeden Zugträgers (22, 22a, 22b) mindestens 70 % einer Gesamthöhe (H_{R}) des Riemens (7) entspricht.

11. Verfahren zum Herstellen eines Riemens (7) zum Tragen eines Fahrkorbs (5) und/oder eines Gegengewichts (13) einer Aufzugsanlage () nach einem der vorhergehenden Ansprüche, wobei das Verfahren umfasst:
Bereitstellen mehrerer Zugträger (22, 22a, 22b) zum Übertragen von Zugkräften, wobei jeder Zugträger (22, 22a, 22b) durch mehrere miteinander verdrillte Litzen (31, 31a, 31b) gebildet ist und jede Litze (31, 31a, 31b) durch mehrere miteinander verdrillte Aramidfasern (23) gebildet ist;
Vorheizen der Zugträger (22, 22a, 22b) auf eine Temperatur zwischen 120 °C und 160 °C, bevorzugt zwischen 130 °C und 150 °C, besonders bevorzugt zwischen 135 °C und 145 °C;
Formen eines die Zugträger (22, 22a, 22b) einbettenden Riemenkörpers (17) mit einer Traktionsseite (21) zum Berühren einer Treibscheibe (11) der Aufzugsanlage (1) und einer der Traktionsseite (21) gegenüberliegenden Rückenseite (19) durch Einbetten der vorgeheizten Zugträger (22, 22a, 22b) in ein Elastomermaterial durch Extrudieren des Elastomermaterials.

12. Verfahren nach Anspruch 11,
wobei das Formen des Riemenkörpers (17) umfasst:
Formen eines Grundkörpers durch Einbetten der vorgeheizten Zugträger (22, 22a, 22b) in das Elastomermaterial durch Extrudieren des Elastomermaterials in einem ersten Extrudierschritt;
Formen des Riemenkörpers (17) durch Aufbringen der Traktionsseite (21) und der Rückenseite (19) auf den Grundkörper durch erneutes Extrudieren des Elastomermaterials in mindestens einem zweiten Extrudierschritt.

13. Aufzugsanlage (1), umfassend:
den Riemen (7) nach einem der Ansprüche 1 bis 10;
einen Aufzugsschacht (3);
einen im Aufzugsschacht (3) verfahrbar angeordneten Fahrkorb (5), wobei der Riemen (7) den Fahrkorb (5) trägt; und/oder
ein im Aufzugsschacht (3) verfahrbar angeordnetes Gegengewicht (13), wobei der Riemen (7) das Gegengewicht (13) trägt.

14. Aufzugsanlage (1) nach Anspruch 13,
ferner umfassend eine Treibscheibe (11), wobei der Riemen (7) mit seiner Traktionsseite (21) die Treibscheibe (11) berührt und ein Durchmesser (D_{T}) der Treibscheibe (11) um einen Faktor 80 bis 120, insbesondere 90 bis 110, grösser als ein Durchmesser (d_{A}, d_{M}) einer dicksten Litze (31, 31a, 31b) des Riemens (7) ist; und/oder
wobei der Fahrkorb (5) eine eigene Bremse (15) umfasst, die ausgebildet ist, um den Fahrkorb (5) im normalen Betrieb der Aufzugsanlage (1) abzubremsen und/oder festzuhalten; und/oder
weiter umfassend eine weitere Treibscheibe (11), wobei der Riemen (7) mit seiner Traktionsseite (21) die weitere Treibscheibe (11) berührt.

## Claims

1. Belt (7) for suspending an elevator car (5) and/or a counterweight (13) of an elevator system (1), the belt (7) comprising:
a belt body (17) with a traction side (21) for contacting a traction sheave (11) of the elevator system (1) and a back side (19) opposite the traction side (21), wherein the belt body (17) has a groove profile (24) adapted to an outer contour of the traction sheave (11) on the traction side (21) and a profile deviating from the groove profile (24) on the back side (19);
multiple tension members (22, 22a, 22b) embedded in the belt body (17) for the purpose of transmitting tensile forces, wherein each tension member (22, 22a, 22b) is formed by multiple strands (31, 31a, 31b) twisted together, and each strand (31, 31a, 31b) is formed by multiple metallic or non-metallic fibers (23) twisted together,
**characterized in that** a film (29) made of an electrically conductive material, in particular copper, is applied to the back side (19) and/or at least one steel reinforcement is embedded in the strap body (17).

2. Belt (7) according to claim 1,
wherein a profile height (H_{P}) of the groove profile (24) corresponds to at least half of the total height (H_{R}) of the belt (7); and/or
wherein the belt body (17) is flat on the back side (19).

3. Belt (7) according to any of the preceding claims,
wherein each tension member (22, 22a, 22b) comprises a central strand (31a) and multiple, in particular six, outer strands (31b) which surround the central strand (31a); and/or
wherein a ratio of a diameter (d_{A}) of a thinnest of the strands (31, 31a, 31b) to a diameter (d_{M}) of a thickest of the strands (31, 31a, 31b) is at least 0.8, in particular at least 0.9.

4. Belt (7) according to any of the preceding claims,
wherein a ratio of breaking load to width of the belt is greater than 2 kN/mm, in particular greater than 3, particularly preferably between 3.6 and 3.75 and/or greater than 4, in particular greater than 5, particularly preferably between 5.2 and 5.4 kN/mm.

5. Belt (7) according to any of the preceding claims,
wherein the tension members (22, 22a, 22b) comprise at least one first tension member (22a) and at least one second tension member (22b) which differ from one another in their direction of lay (L, R).

6. Belt (7) according to claim 5,
wherein the tension members (22, 22a, 22b) comprise multiple first tension members (22a) and multiple second tension members (22b) which are arranged distributed over a width (B) of the belt body (17), wherein at least one of the second tension members (22b) is arranged between adjacent first tension members (22a).

7. Belt (7) according to any of the preceding claims,
wherein at least four tension members (22, 22a, 22b) are embedded in the belt body (17); and/or
wherein the number of tension members (22, 22a, 22b) embedded in the belt body (17) is even.

8. Belt (7) according to any of the preceding claims,
wherein each tension member (22, 22a, 22b) has a fire-retardant sheathing (33), in particular a fire-retardant polyurethane sheathing (33).

9. Belt (7) according to any of the preceding claims,
wherein the groove profile (24) is formed by multiple elevations (25) and depressions (27); wherein each tension member (22, 22a, 22b) is embedded in one of the elevations (25) such that a cross-sectional area of the elevation (25) comprises at least half a cross-sectional area of the tension member (22, 22a, 22b).

10. Belt (7) according to any of the preceding claims,
wherein a diameter (D_{Z}) of each tension member (22, 22a, 22b) corresponds to at least 70% of a total height (H_{R}) of the belt (7).

11. Method for producing a belt (7) for suspending an elevator car (5) and/or a counterweight (13) of an elevator system (1) according to any of the preceding claims, the method comprising:
providing multiple tension members (22, 22a, 22b) for the purpose of transmitting tensile forces, wherein each tension member (22, 22a, 22b) is formed by multiple strands (31, 31a, 31b) twisted together, and each strand (31, 31a, 31b) is formed by multiple aramid fibers (23) twisted together;
preheating the tension members (22, 22a, 22b) to a temperature between 120°C and 160°C, preferably between 130°C and 150°C, particularly preferably between 135°C and 145°C;
molding a belt body (17) embedding the tension members (22, 22a, 22b), with a traction side (21) for contacting a traction sheave (11) of the elevator system (1) and a back side (19) opposite the traction side (21), by embedding the preheated tension members (22, 22a, 22b) in an elastomer material, by extruding the elastomer material.

12. Method according to claim 11,
wherein molding the belt body (17) comprises:
molding a base body by embedding the preheated tension members (22, 22a, 22b) in the elastomer material, by extruding the elastomer material in a first extrusion step;
molding the belt body (17) by applying the traction side (21) and the back side (19) to the base body by again extruding the elastomer material in at least one second extrusion step.

13. Elevator system (1), comprising:
a belt (7) according to any of claims 1 to 10,
an elevator shaft (3);
an elevator car (5) arranged to be able to travel in the elevator shaft (3), the belt (7) suspending the elevator car (5); and/or
a counterweight (13) arranged to be able to travel in the elevator shaft (3), wherein the belt (7) carries the counterweight (13).

14. Elevator system (1) according to claim 13,
further comprising a traction sheave (11), wherein the belt (7) contacts the traction sheave (11) with its traction side (21), and a diameter (D_{T}) of the traction sheave (11) is greater by a factor of 80 to 120, in particular 90 to 110, than a diameter (d_{A}, d_{M}) of a thickest strand (31, 31a, 31b) of the belt (7); and/or
wherein the elevator car (5) comprises its own brake (15) which is designed to brake and/or hold the elevator car (5) during normal operation of the elevator system (1); and/or
further comprising a further traction sheave (11), wherein the belt (7) contacts the further traction sheave (11) with its traction side (21).

## Revendications

1. Courroie (7) destinée à supporter une cabine (5) et/ou un contrepoids (13) d'une installation d'ascenseur (1), la courroie (7) comprenant :
un corps de courroie (17) comportant une face de traction (21) destinée à venir en contact avec une poulie motrice (11) de l'installation d'ascenseur (1) et une face arrière (19) opposée à la face de traction (21) (19) opposée à la face de traction (21), le corps de courroie (17) présentant, sur la face de traction (21), un profil rainuré (24) adapté au contour extérieur de la poulie motrice (11) et, sur la face arrière (19), un profil différent du profil rainuré (24) ;
plusieurs éléments de traction (22, 22a, 22b) intégrés dans le corps de courroie (17) pour transmettre des forces de traction, chaque élément de traction (22, 22a, 22b) étant formé de plusieurs torons (31, 31a, 31b) et chaque toron (31, 31a, 31b) étant formé de plusieurs fibres métalliques ou non métalliques (23) torsadées entre elles,
**caractérisée en ce qu'**une feuille (29) en un matériau électriquement conducteur, en particulier en cuivre, est appliquée sur la face arrière (19) et/ou qu'au moins un support de traction en acier est intégré dans le corps de la courroie (17).

2. Courroie (7) selon la revendication 1,
dans laquelle une hauteur de profil (H_{P} ) du profil rainuré (24) correspond à au moins la moitié de la hauteur totale (H_{R}) de la courroie (7) ; et/ou
le corps de courroie (17) étant plat au niveau de la face arrière (19).

3. Courroie (7) selon l'une des revendications précédentes,
dans laquelle chaque support de traction (22, 22a, 22b) comprend un toron central (31a) et plusieurs, en particulier six, torons extérieurs (31b) qui entourent le toron central (31a) ; et/ou
dans laquelle le rapport entre le diamètre (d_{A}) du toron le plus fin (31, 31a, 31b) et le diamètre (d_{M}) du toron le plus épais (31, 31a, 31b) est d'au moins 0,8, en particulier d'au moins 0,9.

4. Courroie (7) selon l'une des revendications précédentes,
dans laquelle le rapport entre la charge de rupture et la largeur de la courroie est supérieur à 2 kN/mm, en particulier supérieur à 3, de préférence compris entre 3,6 et 3,75, et/ou supérieur à 4, en particulier supérieur à 5, de préférence compris entre 5,2 et 5,4 kN/mm.

5. Courroie (7) selon l'une des revendications précédentes,
les éléments de traction (22, 22a, 22b) comprenant au moins un premier élément de traction (22a) et au moins un deuxième élément de traction (22b) dont les directions de traction (L, R) divergent l'une de l'autre.

6. Courroie (7) selon la revendication 5,
les éléments de traction (22, 22a, 22b) comprennent plusieurs premiers éléments de traction (22a) et plusieurs seconds éléments de traction (22b) qui sont répartis sur une largeur (B) du corps de courroie (17), au moins un des seconds éléments de traction (22b) étant disposé entre des premiers éléments de traction (22a) adjacents.

7. Courroie (7) selon l'une des revendications précédentes,
dans laquelle au moins quatre éléments de traction (22, 22a, 22b) sont intégrés dans le corps de courroie (17) ; et/ou
le nombre d'éléments de traction (22, 22a, 22b) intégrés dans le corps de courroie (17) étant pair.

8. Courroie (7) selon l'une des revendications précédentes,
dans laquelle chaque élément de traction (22, 22a, 22b) comporte un revêtement ignifuge (33), en particulier un revêtement en polyuréthane ignifuge (33).

9. Courroie (7) selon l'une des revendications précédentes,
dans laquelle le profil rainuré (24) est formé par plusieurs saillies (25) et creux (27) ;
chaque élément de traction (22, 22a, 22b) étant encastré dans l'une des saillies (25), de sorte qu'une section transversale de la saillie (25) couvre au moins la moitié de la section transversale de l'élément de traction (22, 22a, 22b).

10. Courroie (7) selon l'une des revendications précédentes,
le diamètre (D_{Z}) de chaque élément de traction (22, 22a, 22b) correspondant à au moins 70 % de la hauteur totale (H_{R}) de la courroie (7).

11. Procédé de fabrication d'une courroie (7) destinée à supporter une cabine (5) et/ou un contrepoids (13) d'une installation d'ascenseur (1) selon l'une des revendications précédentes, le procédé comprenant :
la mise à disposition de plusieurs éléments de traction (22, 22a, 22b) destinés à transmettre des forces de traction, chaque élément de traction (22, 22a, 22b) étant formé de plusieurs torons (31, 31a, 31b) torsadés entre eux de manière (31, 31a, 31b) et chaque toron (31, 31a, 31b) étant formé de plusieurs fibres d'aramide (23) torsadées entre elles ;
préchauffage des éléments de traction (22, 22a, 22b) à une température comprise entre 120 °C et 160 °C, de préférence entre 130 °C et 150 °C, de manière particulièrement préférée entre 135 °C et 145 °C ;
moulage d'un corps de courroie (17) (22, 22a, 22b) avec une face de traction (21) destinée à venir en contact avec une poulie motrice (11) de l'installation d'ascenseur (1) et une face arrière (19) opposée à la face de traction (21), en enrobant les éléments de traction préchauffés (22, 22a, 22b) dans un matériau élastomère par extrusion dudit matériau élastomère.

12. Procédé selon la revendication 11,
dans lequel le moulage du corps de courroie (17) comprend :
le moulage d'un corps de base par incorporation des éléments de traction préchauffés (22, 22a, 22b) dans le matériau élastomère par extrusion de ce dernier au cours d'une première étape d'extrusion ;
Formation du corps de courroie (17) par application de la face de traction (21) et de la face arrière (19) sur le corps de base, par une nouvelle extrusion du matériau élastomère au cours d'au moins une deuxième étape d'extrusion.

13. Installation d'ascenseur (1) comprenant :
la courroie (7) selon l'une des revendications 1 à 10 ;
une cage d'ascenseur (3) ;
une cabine (5) disposée de manière mobile dans la cage d'ascenseur (3), la courroie (7) supportant la cabine (5) ; et/ou
un contrepoids (13) disposé de manière mobile dans la cage d'ascenseur (3), la courroie (7) supportant le contrepoids (13).

14. Installation d'ascenseur (1) selon la revendication 13,
comprenant en outre une poulie motrice (11), la courroie (7) étant en contact avec la poulie motrice (11) par sa face de traction (21) et le diamètre (D_{T} ) de la poulie motrice (11) est supérieur d'un facteur compris entre 80 et 120, en particulier entre 90 et 110, au diamètre (d_{A}, d_{M} ) d'un toron le plus épais (31, 31a, 31b) de la courroie (7) ; et/ou
la cabine (5) comprenant son propre freinage (15) conçu pour freiner et/ou immobiliser la cabine (5) pendant le fonctionnement normal de l'installation d'ascenseur (1) ; et/ou
comprenant en outre une autre poulie motrice (11), la courroie (7) étant en contact avec ladite autre poulie motrice (11) par sa face de traction (21).
